# EUROPEAN PATENT SPECIFICATION

(11) **EP 2 921 776 B1**
(45) Date of publication and mention of the grant of the patent: **08.01.2020**
(21) Application number: 13855325.0
(22) Date of filing: 13.11.2013
(51) Int. Cl.: F23B 80/00, F23B 40/04, F23L 1/00, F23J 1/00, F23L 9/04, F23B 10/02

(54) **DEVICE FOR CENTRIFUGAL COMBUSTION BY AREA USING FLOW OF COMBUSTION AIR**
VORRICHTUNG ZUR ZENTRIFUGALEN VERBRENNUNG DURCH EINEN BEREICH MITTELS VERBRENNUNGSLUFTSTRÖMUNG
DISPOSITIF POUR COMBUSTION CENTRIFUGE PAR SURFACE UTILISANT UN FLUX D'AIR COMBURANT

(30) Priority: 14.11.2012 KR 20120128977
(43) Date of publication of application: 23.09.2015
(73) Proprietor: Kim, JiWon, Gyeongsangbuk-do 718-832 (KR); POSCO, Gyeongsangbuk-do 790-300 (KR)
(72) Inventor: JiWon, Kim, Gyeongsangbuk-do 718-832 (KR)
(74) Representative: Zech, Stefan Markus
(86) International application number: PCT/KR2013/010276
(87) International publication number: WO 2014/077574

(56) References cited:
- JP-A- 2011 099 595
- KR-A- 20030 083 044
- KR-B1- 100 907 269
- KR-B1- 101 160 053
- US-A1- 2004 081 929
- US-A1- 2009 126 607
- US-A1- 2012 017 849

## Description

### Technical Field

The present invention relates to an area-specific centrifugal combustion apparatus using a flow of combustion air. More particularly, the present invention relates to an area-specific centrifugal combustion apparatus using a flow of combustion air able to perfectly burn low grade fuel containing impurities like refined fuel by centrifugally dividing a space using a strong air curtain rather than using a refractory wall. In the area-specific centrifugal combustion apparatus, it is possible to completely divide a fuel input area, a combustion air preheating area, an ignition and combustion area, a separation and discharge area for airborne ash and nonflammable matter, and a combustion heat and gas discharge area from each other by adjusting a rate at which combustion air is input, such that perfect combustion can continuously proceed, and after the combustion, combustion heat-containing gases are discharged after being completely separated from airborne ash without contaminating heat-using facilities, thereby improving heat efficiency.

### Background Art

In general, industrial facilities requiring industrial hot water, steam, or high-temperature gas use a combustion apparatus that generates heat energy by igniting and burning fuel within a combustion chamber in order to obtain heat energy. In such combustion apparatuses, solid fuel, such as refuse-derived fuel (RDF) produced from domestic waste or waste plastic, is generally used as fuel considering economic competitiveness and resource recycling.

When waste is to be burned using such a combustion apparatus, a flammable substance is input into a combustion chamber of a combustion furnace and is subsequently ignited using an ignition burner, and combustion air is blown into the combustion chamber in the linear direction from respective upper, middle, and lower sides of the combustion furnace, such that the flammable substance burns with the combustion air.

However, in the combustion apparatus of the related art, when combustion proceeds simply with cool air supplied from the blower, combustion efficiency is low, and a variety of high calorie substances, low calorie substances, and high substances are not perfectly incinerated due to imperfect combustion. In particular, a large amount of hazardous substances fatal to humans, such as dioxins, are exhausted into the atmosphere, thereby causing pollution including air pollution. Accordingly, the use of conventional combustion furnaces raises severe social and environmental issues.

In addition, in the combustion apparatus of the related art, a combustion furnace for high-temperature flammable matter cannot realize high-temperature combustion without expensive construction costs or intensive labor. Specifically, a burner specially fabricated for use in a high-speed and high-temperature environment is disposed, high-pressure oxygen is injected, and the furnace wall is formed of refractory bricks. The combustion chamber formed of a metal material suffers from corrosion since it cannot withstand a high-temperature environment. This consequently reduces the lifespan of the combustion chamber.

Furthermore, in the combustion apparatus of the related art, some structures, such as a stoker having a shaft tunnel, a fluidized bed incinerator, a cyclone incinerator, and a rotary kiln incinerator, cannot obtain perfect combustion without a refractory wall that stores heat. However, clinker is inevitably produced, thereby restricting continuous operation or lowering heat efficiency. Although a centrifugal combustion method blocks heat using a flow of combustion air without the refractory wall, continuous operation is restricted due to various phenomena, such as the production of clinker.

Accordingly, a centrifugal combustion apparatus as follows was proposed.

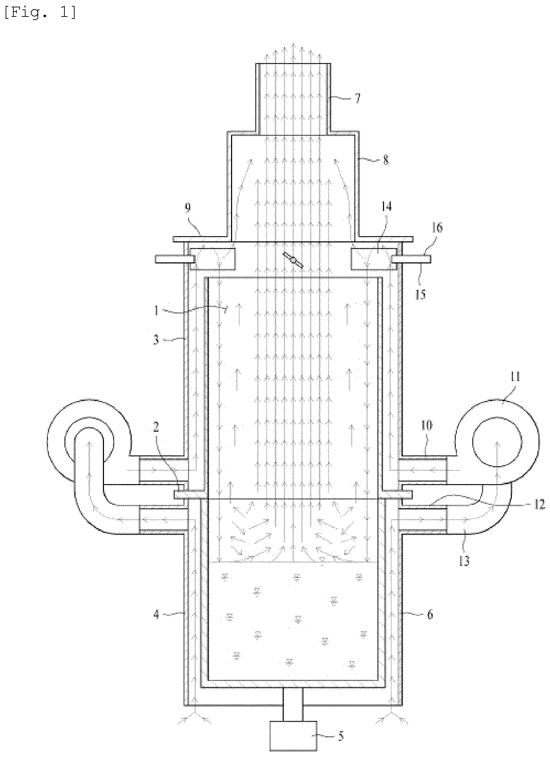

FIG. 1 is a view illustrating a combustion apparatus of the related art.

Referring to the combustion apparatus of the related art illustrated in this figure, a flange 2 protrudes outward from the lower end of a first combustion chamber 1. An upper outer tank 3 and a lower outer tank 4 are fixed to the upper surface and the lower surface of the circumference of the flange 2. A fuel tank 6 is disposed below the first combustion chamber 1 such that the upper surface of the fuel tank 6 is in close contact with the lower surface of the flange 2 of the first combustion chamber 1. The fuel tank 6 is opened upward, and a hydraulic jack 5 is coupled with the lower portion of the fuel tank 6. A flange 9 is fixedly disposed on the upper surface of the upper outer tank 3, and protrudes outward from the lower end of a second combustion chamber 8 having an exhaust tank 7 on the upper portion thereof. One or a plurality of air blowers 11 is disposed on air supply pipes 10 connected to the lower portions of the upper outer tank 3 in the tangential direction of the air blowers 11 such that the air blowers 11 communicate with air inlet pipes 12 and air connecting pipes 13 connected to the upper portions of the lower outer tank 4. A plurality of air regulating devices 16 is disposed on the upper portions of the upper outer tank 3. Each of the air regulating devices 16 includes an air regulator plate 14 positioned above the space between the first combustion chamber 1 and the upper outer tank 3 and a regulator rod 15 with which the air regulator plate 14 is fixedly and rotatably coupled.

Further combustion apparatuses known in the art are disclosed, for example, in US 2009/126607 A1, US 2012/017849 A1 and KR 101 160 053 B1.

### Disclosure

### Technical Problem

Accordingly, the present invention has been made keeping in mind the above problems occurring in the prior art, and an object of the present invention is to perfectly burn low grade fuel containing impurities like refined fuel by centrifugally dividing a space using a strong air curtain without a refractory wall. It is possible to completely divide a fuel input area, a combustion air preheating area, an ignition and combustion area, a separation and discharge area for airborne ash and nonflammable matter, and a combustion heat and gas discharge area from each other by adjusting a rate at which combustion air is input, such that perfect combustion can continuously proceed.

Another object of the present invention is to separate combustion heat-containing gas from ash, clinker, and airborne ash within the combustion chamber after the combustion, such that clean combustion heat and gas are introduced into heat-using facilities, whereby pollution is prevented and heat efficiency is maximized.

A further object of the present invention is to burn only flammable matter while floating nonflammable matter by preheating combustion air to an ignition temperature or higher and using the negative pressure of an ignition chamber, even in the case of using low grade fuel, such that airborne ash is perfectly separated and discharged due to centrifugation using high-speed rotation, thereby preventing clinker.

### Technical Solution

In order to accomplish the above object(s), the present invention provides an area-specific centrifugal combustion apparatus using a flow of combustion air including: an upper combustion chamber through which combustion air is suppliable, and that is configured to discharge a column of fire produced through combustion using the combustion air; a lower combustion chamber coupled with a lower part of the upper combustion chamber, the lower combustion chamber being configured so that fuel is suppliable through the lower combustion chamber such that the fuel mixes with the combustion air; an air supply pipe having one end divided into an upper supply pipe and a lower supply pipe, the upper supply pipe diverging upward and the lower supply pipe diverging downward, the air supply pipe being configured to supply combustion air to the upper combustion chamber and the lower combustion chamber; a rotary part connected to the lower combustion chamber, wherein the rotary part is configured to allow the combustion air to maintain a centrifugal force when ignition proceeds in the lower combustion chamber; a fuel supply provided on a lower end of the rotary part, the fuel supply comprising a fixed quantity feeder that is configured to allow the fuel to be supplied in a fixed amount to the lower combustion chamber; and an ash treatment chamber disposed at one side of the rotary part, the ash treatment chamber being configured to trap and treat ash, clinker, and airborne ash produced through incineration of the fuel.

In addition, according to the invention, the upper combustion chamber includes: an upper combustion chamber outer tank in a cylindrical shape opened in the top-bottom direction having a combustion gas discharge panel through which the column of fire is discharged, wherein the upper combustion chamber outer tank is connected to the upper supply pipe such that the combustion air that has been supplied upwardly is able to flow; a redirecting part disposed on an upper end of the upper combustion chamber outer tank, the redirecting part being configured to redirect the combustion air to flow downwardly; and an upper combustion chamber inner tank disposed at a predetermined distance from an inner circumference of the upper combustion chamber outer tank to form an upper air supply, the upper supply pipe being fixed to the upper combustion chamber inner tank in a communicating manner.

Furthermore, according to the invention, the lower combustion chamber is connected to a lower end of the upper combustion chamber. The lower combustion chamber includes: a lower combustion chamber outer tank, with a lower end thereof being connected to the rotary part, wherein the lower combustion chamber outer tank is connected to the lower supply pipe, and being configured to cause the combustion air supplied thereto to flow downwardly; and a lower combustion chamber inner tank disposed inside the lower combustion chamber outer tank to form a lower air supply, the lower supply pipe being fixed to the lower combustion chamber inner tank in a communicating manner.

In addition, according to the invention, the area-specific centrifugal combustion apparatus may further include a regulating damper disposed at a diverging point of the air supply pipe, the regulating damper being able to regulate a temperature of air and an amount of air supplied.

Furthermore, according to the invention, the rotary part may include: a rotary housing connected to a lower portion of the lower combustion chamber, the rotary housing being coupled with props that fix the combustion apparatus to a ground surface; a rotary body disposed within the rotary housing, wherein the rotary body rotates forward and backward to allow the combustion air preheated while moving downward to maintain centrifugal force; and an ash treatment chamber disposed between the rotary housing and the rotary body, wherein the ash treatment chamber traps the ash, the clinker, and the airborne ash produced after perfect combustion.

In addition, according to the invention, the rotary body may include: a rotary shaft connected to a driving motor such that rotary shaft is rotatably coupled with the rotary housing, thereby providing rotating force; a guide rail connected to the rotary shaft, wherein the guide rail guides a range of rotation of the rotary body; a bearing body supporting rotation of the rotary shaft and the guide rail; crushing blades disposed on a lower portion of the rotary body, wherein the crushing blades crush the ash, the clinker, and the airborne ash produced after completion of combustion; and an opening/closing door allowing the ash, the clinker, and the airborne ash crushed by the crushing blades to be introduced to the ash treatment chamber.

Furthermore, according to the invention, when the crushing blades of the rotary body rotate forward, the clinker is crushed, the fuel is collected at a center of the combustion chamber, and debris is continuously discharged, and when the crushing blades of the rotary body rotate backward, the debris, the ash, and the clinker are continuously discharged to an ash chamber through the opening/closing door. The area-specific centrifugal combustion apparatus may further include a bidirectional-functional discharge scraper discharging the debris, the ash, and the clinker collected in the ash chamber to an ash container.

In addition, according to the invention, the fuel supply may include a fuel input cone, wherein an upper portion of the fuel input cone is in a funnel shape such that a fixed amount of fuel uniformly spreads in a hemispherical shape.

### Advantageous Effects

According to the present invention, it is possible to perfectly burn low grade fuel containing impurities like refined fuel by centrifugally dividing a space using a strong air curtain without a refractory wall. Specifically, it is possible to completely divide a fuel input area, a combustion air preheating area, an ignition and combustion area, a separation and discharge area for airborne ash and nonflammable matter, and a combustion heat and gas discharge area from each other by adjusting a rate at which combustion air is input, such that perfect combustion can continuously proceed.

In addition, according to the present invention, it is possible to separate combustion heat-containing gas from ash, clinker, and airborne ash within the combustion chamber after the combustion, such that clean combustion heat and gas are introduced into heat-using facilities, whereby pollution is prevented and heat efficiency is maximized.

Furthermore, according to the present invention, it is possible to burn only flammable matter while floating nonflammable matter by preheating combustion air to an ignition temperature or higher and using the negative pressure of an ignition chamber, even in the case of using low grade fuel, such that airborne ash is perfectly separated and discharged due to centrifugation using high-speed rotation, thereby preventing clinker.

### Description of Drawings

FIG. 1 is a view illustrating a combustion apparatus of the related art;
FIGS. 2 and 3 are views illustrating an area-specific centrifugal combustion apparatus using a flow of combustion air according to an exemplary embodiment of the invention;
FIGS. 4 and 5 are enlarged views of the key parts illustrating the area-specific centrifugal combustion apparatus using a flow of combustion air according to an exemplary embodiment of the invention;
FIGS. 6 to 13 are cross-sectional views taken along lines A-A' to H-H' illustrating the area-specific centrifugal combustion apparatus using a flow of combustion air according to an exemplary embodiment of the invention; and
FIG. 14 is a view illustrating the operation state of the area-specific centrifugal combustion apparatus using a flow of combustion air according to an exemplary embodiment of the invention.

### Mode for Invention

Reference will now be made in greater detail to an exemplary embodiment of the present invention, an example of which is illustrated in the accompanying drawings. Wherever possible, the same reference numerals will be used throughout the drawings and the description to refer to the same or like parts. In the following description of the present invention, detailed descriptions of known functions and components incorporated herein will be omitted in the case that the subject matter of the present invention is rendered unclear.

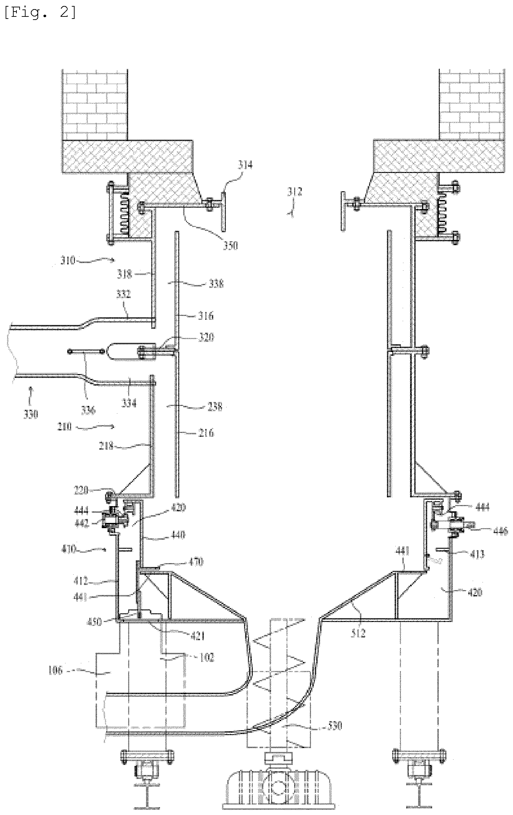

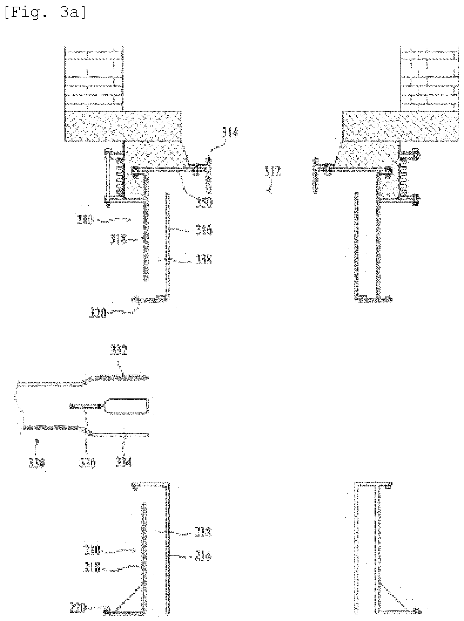

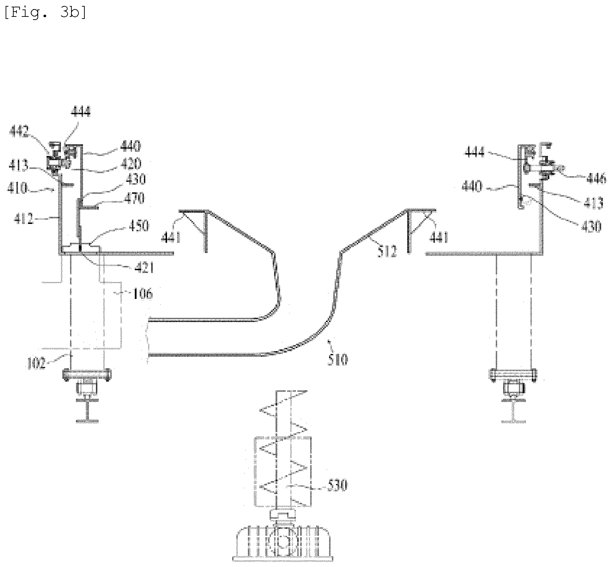

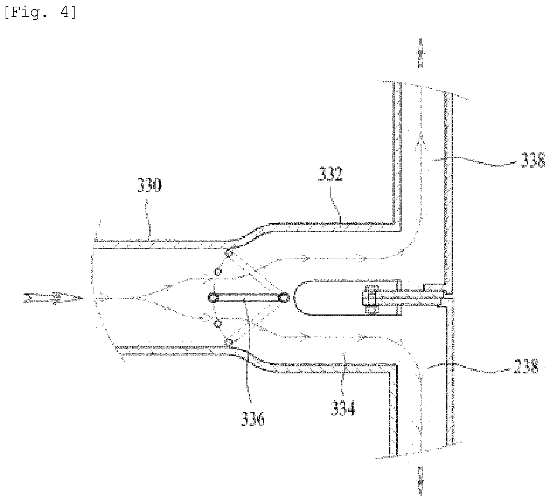

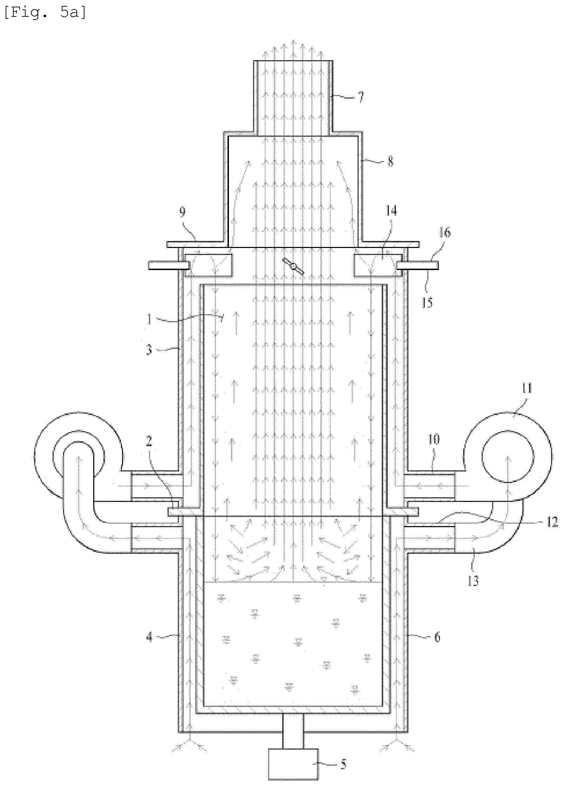

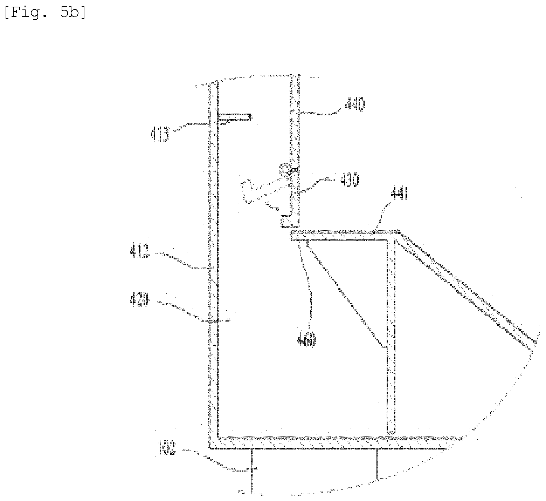

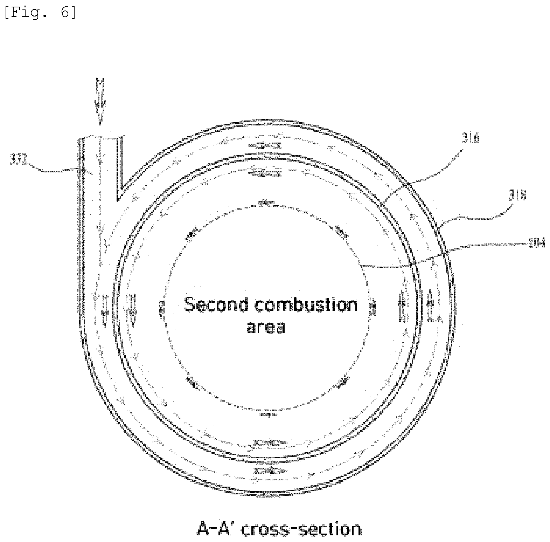

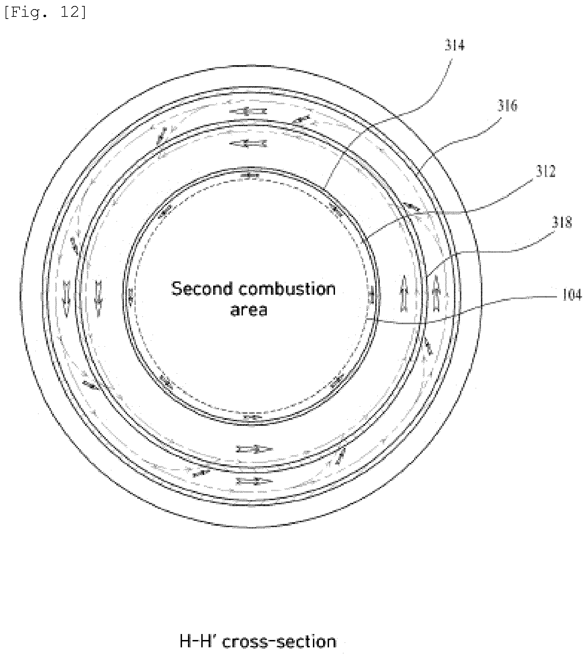

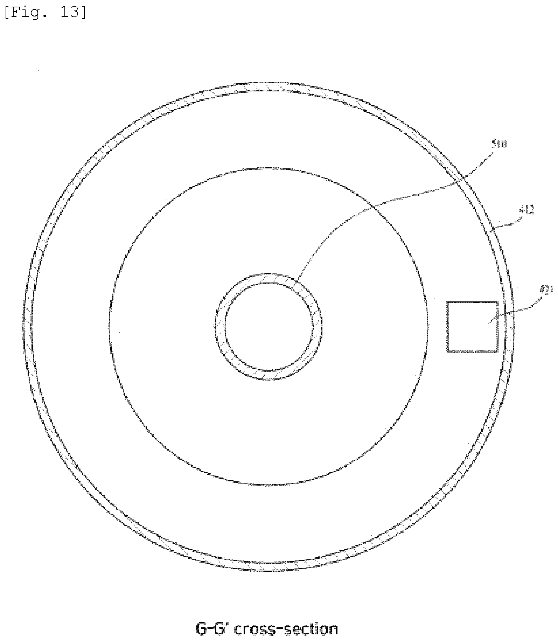

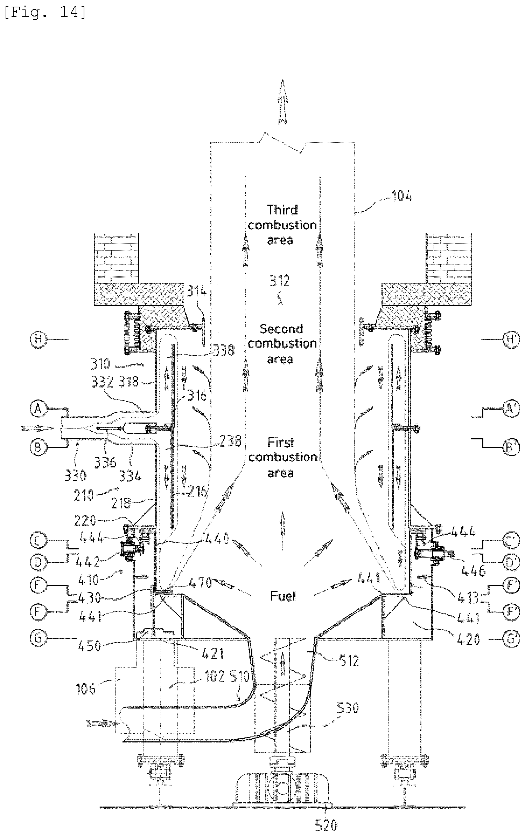

FIGS. 2 and 3 are views illustrating an area-specific centrifugal combustion apparatus using a flow of combustion air according to an exemplary embodiment of the invention, FIGS. 4 and 5 are enlarged views of the key parts illustrating the area-specific centrifugal combustion apparatus using a flow of combustion air according to an exemplary embodiment of the invention, FIGS. 6 to 13 are cross-sectional views taken along A-A' and H-H' illustrating the area-specific centrifugal combustion apparatus using a flow of combustion air according to an exemplary embodiment of the invention, and FIG. 14 is a view illustrating the operation state of the area-specific centrifugal combustion apparatus using a flow of combustion air according to an exemplary embodiment of the invention.

As illustrated in the drawings, the area-specific centrifugal combustion apparatus includes an upper combustion chamber 310, a lower combustion chamber 210, a rotary part 410, a fuel supply 510, and an ash treatment chamber 420. Combustion air is rotated by a centrifugal force within the upper combustion chamber 310, and a column of fire produced through perfect combustion with the combustion air is discharged from the upper combustion chamber 310. The lower combustion chamber 210 is coupled with the lower part of the upper combustion chamber 310. The lower combustion chamber 210 is configured such that fuel supplied to the lower combustion chamber 210 mixes with the combustion air for perfect combustion. The rotary part 410 is connected to the lower combustion chamber 210, and regulates the combustion air to maintain centrifugal force when ignition proceeds in the lower combustion chamber 210. The fuel supply 510 supplies the fuel to the lower combustion chamber 210. The ash treatment chamber 420 traps and treats ash, clinker, airborne ash, and the like produced through incineration of the fuel during the combustion.

The upper combustion chamber 310 includes an upper combustion chamber outer tank 318, upper combustion chamber inner tank 316, a combustion gas discharge panel 314, and a coupling flange 320.

The upper combustion chamber outer tank 318 is a component forming the outer shape of the area-specific centrifugal combustion apparatus. The upper combustion chamber outer tank 318 is in a cylindrical shape opened in the top-bottom direction, and is configured to prevent combustion air supplied thereto from leaking. The upper combustion chamber outer tank 318 having this configuration is connected to an upper air supply pipe 332 of an air supply pipe 330 through which the combustion air is supplied to the upper combustion chamber outer tank 318. The upper combustion chamber outer tank 318 allows the combustion air to flow upwardly.

The upper combustion chamber outer tank 318 having this configuration has a combustion gas discharge panel 314 on the upper end through which the column of fire produced through the perfect combustion can be discharged. A gas discharge port 312 through which the column of fire is vertically discharged is formed in the center of the combustion gas discharge panel 314.

In addition, a redirecting part 350 is provided on the upper end of the upper combustion chamber outer tank 318. The redirecting part 350 allows the combustion air supplied into the combustion chamber through an upper air supply 338 to flow downwardly.

The upper combustion chamber inner tank 316 is in a cylindrical shape, and is disposed at a predetermined distance from the inner circumference of the upper combustion chamber outer tank 318. The coupling flange 320 is provided on the lower end of the upper combustion chamber inner tank 316. The coupling flange 320 is coupled with the upper combustion chamber outer tank 318, and allows the upper air supply pipe 332 of the air supply pipe 330 to be fixed in a communicating manner.

Here, the air supply pipe 330 is configured such that one end thereof is divided into an upper supply pipe 332 diverging upward and a lower supply pipe 334 diverging downward, whereby the combustion air can be supplied to the upper combustion chamber 310 and the lower combustion chamber 210.

In addition, a regulating damper 336 is provided at the diverging point of the air supply pipe 330. The damper 336 can regulate the temperature of the air and the amount of the air supplied.

The upper air supply 338 is disposed between the inner circumference of the upper combustion chamber outer tank 318 and the outer circumference of the upper combustion chamber inner tank 316, such that the combustion air is supplied to and flows upwardly through the upper air supply 338.

The lower combustion chamber 210 is a component connected to the lower end of the upper combustion chamber 310. The lower combustion chamber 210 is connected to the lower supply pipe 334 of the air supply pipe 330 such that the combustion air is supplied to the combustion chamber through the lower combustion chamber.

The lower combustion chamber 210 includes a lower combustion chamber outer tank 218 and a lower combustion chamber inner tank 216. A connecting flange 220 is provided on the lower end of the lower combustion chamber outer tank 218 such that the connecting flange is integrally connected to the rotary part 410. The lower combustion chamber inner tank 216 is disposed inside the lower combustion chamber outer tank 218, thereby forming a lower air supply 238.

Due to the upper combustion chamber 310 and the lower combustion chamber 210 according to the invention configured as above, when combustion air is supplied under a predetermined input pressure through the upper air supply 338, the combustion air flows upwardly while rotating in the upper air supply 338 at a velocity with respect to the input pressure. When the combustion air collides against the redirecting part 350, the direction of the combustion air is changed, and the combustion air flows downwardly toward the lower combustion chamber 210. As fuel burns within the combustion chamber due to ignition, the downwardly-flowing combustion chamber is preheated to a predetermined temperature.

In addition, the combustion air input into the lower air supply 238 of the lower combustion chamber 210 also flows downwardly while rotating within the lower air supply 238 at a velocity with respect to the input pressure. At this time, within a rotary body 440 of the rotary part 410, the combustion air mixes with the above-described preheated combustion air flowing downwardly from the upper combustion chamber 310.

That is, the temperature of the air preheated in the upper combustion chamber 310 is adjusted using the combustion air supplied through the lower combustion chamber 210. The temperature of the preheated air can be adjusted in response to the operation of the regulating damper 336.

In addition, the mixed combustion air rotates and flows to the rotary part 410 disposed in the lower part of the lower combustion chamber 210. The combustion air collides against a bottom plate 441 of the combustion chamber, moves upward while rotating, and completely mixes with the fuel.

The rotary part 410 includes a rotary housing 412, the rotary body 440, and an ash treatment chamber 420. The rotary housing 412 is connected to the lower portion of the lower combustion chamber 210. Props 102 fixing the combustion apparatus to the ground are coupled to the rotary housing 412. The rotary body 440 is disposed within the rotary housing 412. When the fuel is burning, the rotary body 440 rotates in a predetermined direction within the rotary housing 412, and imparts centrifugal force to the combustion air preheated while moving downward from the upper combustion chamber 310 and the lower combustion chamber 210. The ash treatment chamber 420 is disposed between the rotary housing 412 and the rotary body 440, and traps ash, clinker, airborne ash, and the like produced after perfect combustion.

The rotary body 440 has a power transmission means by which the rotary body is rotatably coupled with the rotary housing 412. The power transmission means includes a rotary shaft 446 connected to a driving motor, such as a motor, to provide rotating force, a guide rail 444 with one end being connected to the rotary shaft 446, the guide rail 444 guiding the rotary body 440 to reliably rotate based on the rotating force of the rotary shaft 446, and a bearing body 442 supporting the rotation of the rotary shaft 446 and the guide rail 444.

Crushing blades 470 are disposed on the lower portion of the rotary body 440. The crushing blades 470 crush ash, clinker, airborne ash, and the like produced after the completion of combustion. An opening/closing door 430 allows the ash, clinker, airborne ash, and the like crushed by the crushing blades 470 to be introduced to the ash treatment chamber 420 therethrough.

The opening/closing door 430 is configured such that the opening/closing door automatically opens and closes depending on the direction of rotation of the rotary body 440. In the case of forward rotation, ash and clinker are discharged by centrifugation through the bottom plate 441 of the combustion chamber formed on the lower inner circumference of the rotary body 440, and the fuel pushed by the crushing blades 470 is collected at the center. When the rotary body 440 rotates in the backward direction, the ash, the clinker, and the like are pushed outward by the crushing blades 470 and are introduced into the ash treatment chamber 420 as the automatic opening/closing door 430 is opened.

In addition, impurities, such as ash, airborne ash, and clinker, are trapped in the ash treatment chamber 420. A discharge scraper 450 allows the impurities to be continuously discharged from the combustion chamber. When the trapped impurities are accumulated in a predetermined amount, the discharge scraper 450 continuously discharges the impurities through an ash outlet port 421 to an ash container 106.

In addition, a machine room protector plate 413 is provided within the ash treatment chamber 420. The machine room protector plate 413 prevents the trapped impurities from reentering the combustion chamber.

The fuel supply 510 is disposed such that a predetermined space is defined between the fuel supply 510 and the rotary housing 412 of the rotary part 410. The fuel supply 510 has a fixed quantity feeder 530, whereby a fixed amount of fuel can be supplied.

In addition, the fuel supply 510 has a fuel input cone 512. The upper portion of the fuel input cone 512 is in a funnel shape such that a fixed amount of fuel can uniformly spread in a hemispherical shape. The outer circumference of the upper end of the fuel input cone 512 is positioned at the bottom, flush with an ash discharge port 460. This allows the supplied fuel to mix with the preheated air without leakage, whereby perfect combustion is enabled.

In the area-specific centrifugal combustion apparatus using a flow of combustion air according to the invention as configured above, the combustion air preheated through the upper combustion chamber 310 and the lower combustion chamber 210 flows downwardly while rotating along the inner circumference of the rotary part 410, is redirected upward after colliding against the bottom plate 441, and mixes with the fuel spreading in the hemispherical shape from the fuel supply 510, thereby forming a first combustion area. The combustion air that has moved downwardly to the middle portion mixes with the first combustion area, thereby forming a second combustion area. The combustion air enters the gas discharge port 312 and mixes with the remaining combustion air supplied from the upper combustion chamber 310, thereby forming a third combustion area.

That is, the combustion apparatus according to the invention forms the first to third combustion areas, whereby fuel can perfectly burn. Centrifugal force is maintained by removing or reducing obstacles against rotating force in response to the rotation of the rotary part 410. A flame occurring during the combustion forms a column of fire, which is discharged through the gas discharge port 312.

In the combustion apparatus according to the invention as above, as a reaction to the high pressure of the combustion air rotating at a high speed adjacent to the inner walls of the upper combustion chamber 310 and the lower combustion chamber 210, strong negative pressure directed into the gas discharge port 312 is formed in the central portion of the combustion chamber.

In addition, combustion heat-containing gas and nonflammable debris separated from the combustion air are separated from each other, thereby making the outer surface of the air supply clean. The combustion heat-containing gas and the nonflammable debris are sucked into a column of fire within the gas discharge port 312 of the combustion gas discharge panel 314 disposed in the central upper portion of the combustion chamber while sharply rotating together with the remaining unused combustion air. Consequently, perfect combustion is performed, and a column of fire extending upward in the perfect linear shape is formed.

At this time, before the airborne ash is discharged from the combustion chamber, centrifugation is performed by high-speed rotating force within the column of fire. Consequently, the ash is separated from the column of fire by centrifugal force, moves toward the inner wall of the combustion chamber, and is carried on the combustion air that flows downwardly while sharply rotating along the upper combustion chamber inner tank 316 and the lower combustion chamber inner tank 216. In this manner, the ash is separately discharged to the ash treatment chamber 420.

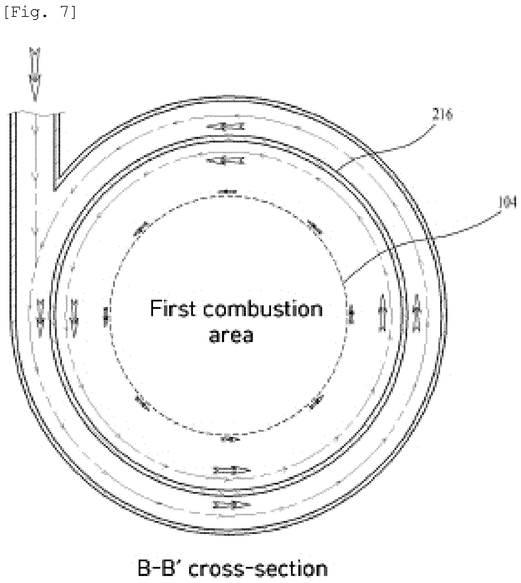

In addition, A-A' and B-B' cross-sections illustrated in FIGS. 6 and 7 indicate the boundary between the first combustion area and the second combustion area. These figures illustrate that, after first combustion has occurred in the first combustion area, combustion migrates to the second combustion area through the boundary.

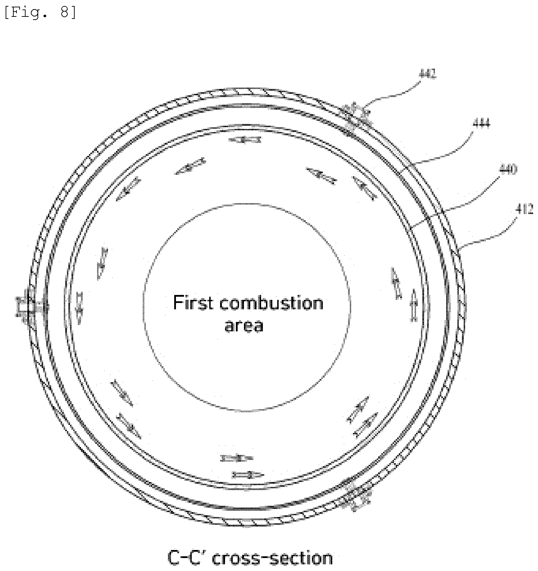

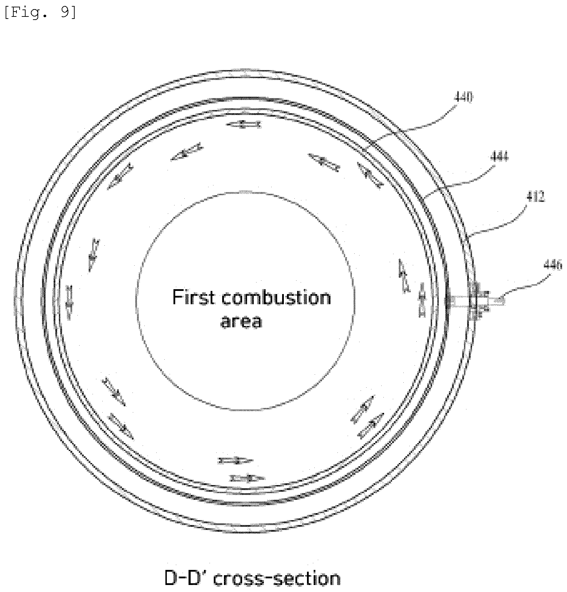

Furthermore, FIGS. 8 and 9 illustrate C-C' and D-D' cross-sections indicating the portions of the first combustion area where combustion is performed. The direction in which airborne ash and preheated air rotate in the first combustion area is indicated.

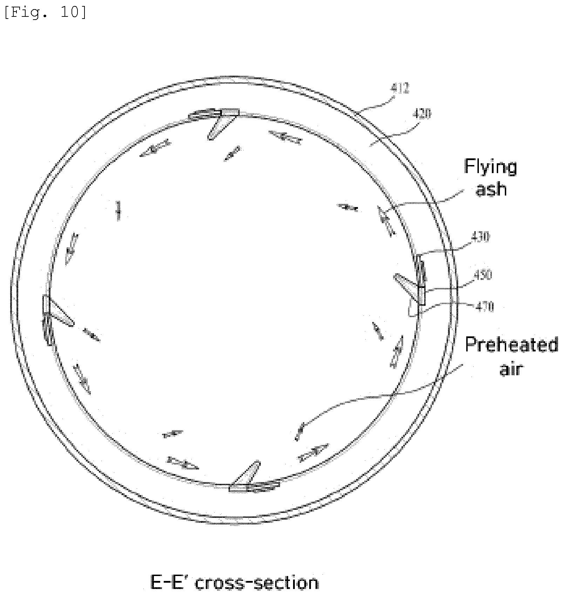

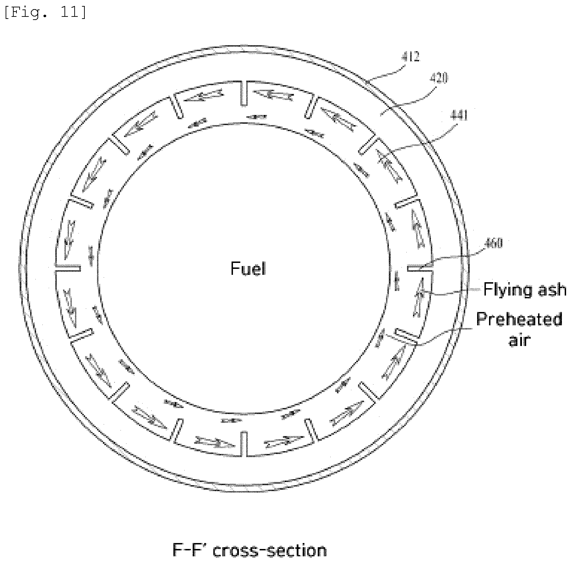

In addition, FIGS. 10 and 11 illustrate E-E' and F-F' cross-sections, in which the airborne ash and the preheated air are rotating in the upper end of the fuel supply part 510.

According to the present invention as set forth above, it is possible to perfectly burn low grade fuel containing impurities like refined fuel by centrifugally dividing a space using a strong air curtain without a refractory wall. Specifically, it is possible to completely divide a fuel input area, a combustion air preheating area, an ignition and combustion area, a separation and discharge area for airborne ash and nonflammable matter, a combustion heat and gas discharge area from each other by adjusting a rate at which combustion air is input, such that perfect combustion can continuously proceed. It is possible to separate combustion heat-containing gas from ash, clinker, and airborne ash within the combustion chamber after the combustion, such that clean combustion heat and gas are introduced into heat-using facilities, whereby pollution is prevented and heat efficiency is maximized. It is possible to burn only flammable matter while floating nonflammable matter by preheating combustion air to an ignition temperature or higher and using the negative pressure of an ignition chamber even in the case of using low grade fuel, such that airborne ash is perfectly separated and discharged due to centrifugation using high-speed rotation, thereby preventing clinker.

In addition, the reference numeral "104" that has not been mentioned in the detailed description of the invention refers to a column of fire.

The foregoing descriptions and the accompanying drawings have been presented in order to explain the certain principles of the present invention. A person skilled in the art to which the present invention relates can make many modifications and variations without departing from the principle of the invention. The foregoing embodiments disclosed herein shall be interpreted as illustrative only but not as limitative of the principle and scope of the invention. It should be understood that the scope of the invention shall be defined by the appended Claims and all of their equivalents fall within the scope of the invention.

## Claims

1. An area-specific centrifugal combustion apparatus using a flow of combustion air, comprising:
an upper combustion chamber (310) through which combustion air is suppliable, and that is configured to discharge a column of fire produced through combustion using the combustion air;
a lower combustion chamber (210) coupled with a lower part of the upper combustion chamber (310), the lower combustion chamber (210) being configured so that fuel is suppliable through the lower combustion chamber (310) such that the fuel mixes with the combustion air;
an air supply pipe (330) having one end divided into an upper supply pipe (332) and a lower supply pipe (334), the upper supply pipe (332) diverging upward and the lower supply pipe (334) diverging downward, the air supply pipe (330) being configured to supply the combustion air to the upper combustion chamber (310) and the lower combustion chamber (210);
a rotary part (410) connected to the lower combustion chamber (210), wherein the rotary part is configured to allow the combustion air to maintain a centrifugal force in response to the rotation of the rotary part (410) when ignition proceeds in the lower combustion chamber (210);
a fuel supply (510) provided on a lower end of the rotary part (410), the fuel supply (510) comprising a fixed quantity feeder (530) that is configured to allow the fuel to be supplied in a fixed amount to the lower combustion chamber (210); and
an ash treatment chamber (420) disposed at one side of the rotary part (410),
the ash treatment chamber (420) being configured to trap and treat ash, clinker, and airborne ash produced through incineration of the fuel,
wherein the upper combustion chamber (310) comprises:
an upper combustion chamber outer tank (318) in a cylindrical shape opened in the top-bottom direction having a combustion gas discharge panel (314) through which the column of fire is discharged, wherein the upper combustion chamber outer tank (318) is connected to the upper supply pipe (332) such that the combustion air that has been supplied upwardly is able to flow;
a redirecting part (350) disposed on an upper end of the upper combustion chamber outer tank (318), the redirecting part (350) being configured to redirect the combustion air to flow downwardly; and
an upper combustion chamber inner tank (316) disposed at a predetermined distance from an inner circumference of the upper combustion chamber outer tank (318) to form an upper air supply, the upper supply pipe (332) being fixed to the upper combustion chamber inner tank (316) in a communicating manner,
wherein the lower combustion chamber (210) is connected to a lower end of the upper combustion chamber (310), and comprises:
a lower combustion chamber outer tank (218), with a lower end thereof being connected to the rotary part (410), wherein the lower combustion chamber outer tank (218) is connected to the lower supply pipe (334) and being configured to cause the combustion air supplied thereto to flow downwardly; and
a lower combustion chamber inner tank (216) disposed inside the lower combustion chamber outer tank (218) to form a lower air supply, the lower supply pipe (334) being fixed to the lower combustion chamber inner tank (216) in a communicating manner.

2. The area-specific centrifugal combustion apparatus according to claim 1, further comprising a regulating damper (336) disposed at a diverging point of the air supply pipe (330), the regulating damper (336) being configured to regulate a temperature of air and an amount of air supplied.

3. The area-specific centrifugal combustion apparatus according to claim 1, wherein the rotary part (410) comprises:
a rotary housing (412) connected to a lower portion of the lower combustion chamber (210), the rotary housing (412) being coupled with props (102) that are configured to fix the combustion apparatus to a ground surface;
a rotary body (440) disposed within the rotary housing (412), wherein the rotary body (440) rotates forward and backward to allow the combustion air preheated while moving downward to maintain centrifugal force; and
an ash treatment chamber (420) disposed between the rotary housing (412) and the rotary body (440), wherein the ash treatment chamber is configured to trap the ash, the clinker, and the airborne ash produced after perfect combustion.

4. The area-specific centrifugal combustion apparatus according to claim 3, wherein the rotary body (440) comprises:
a rotary shaft (446) connected to a driving motor such that rotary shaft is rotatably coupled with the rotary housing, thereby providing rotating force;
a guide rail (444) connected to the rotary shaft (446), wherein the guide rail (444) is configured to guide a range of rotation of the rotary body (440);
a bearing body (442) supporting rotation of the rotary shaft (446) and the guide rail (444);
crushing blades (470) disposed on a lower portion of the rotary body (440), wherein the crushing blades (470) are configured to crush the ash, the clinker, and the airborne ash produced after completion of combustion; and
an opening/closing door (430) configured to allow the ash, the clinker, and the airborne ash crushed by the crushing blades (470) to be introduced to the ash treatment chamber (420).

5. The area-specific centrifugal combustion apparatus according to claim 4,
wherein, when the crushing blades (470) of the rotary body (440) are configured to rotate forward and backward, such that when the crushing blades (470) of the rotary body (440) rotate forward, the clinker is crushed, the fuel is collected at a center of the combustion chamber, and debris is continuously discharged, and when the crushing blades (470) of the rotary body (440) rotate backward, the debris, the ash, and the clinker are continuously discharged to the ash treatment chamber (420) through the opening/closing door (430),
the area-specific centrifugal combustion apparatus further comprising a bidirectional-functional discharge scraper (450) configured to discharge the debris, the ash, and the clinker collected in the ash chamber (420) to an ash container(106).

6. The area-specific centrifugal combustion apparatus according to claim 1,
wherein the fuel supply (510) comprises a fuel input cone (512), wherein an upper portion of the fuel input cone (512) is in a funnel shape such that a fixed amount of fuel uniformly spreads in a hemispherical shape.

## Patentansprüche

1. Vorrichtung zur bereichsspezifischen zentrifugalen Verbrennung unter Verwendung eines Stroms an Verbrennungsluft, umfassend:
eine obere Verbrennungskammer (310), durch die Verbrennungsluft zuführbar ist, und die dazu ausgelegt ist, eine durch die Verbrennung unter Verwendung der Verbrennungsluft erzeugte Feuersäule auszuleiten;
eine untere Verbrennungskammer (210), die mit einem unteren Teil der oberen Verbrennungskammer (310) verbunden ist, wobei die untere Verbrennungskammer (210) so ausgelegt ist, dass Brennstoff durch die untere Verbrennungskammer (310) derart zuführbar ist, dass sich der Brennstoff mit der Verbrennungsluft mischt;
ein Luftzufuhrrohr (330) mit einem Ende, das in ein oberes Zufuhrrohr (332) und ein unteres Zufuhrrohr (334) unterteilt ist, wobei das obere Zufuhrrohr (332) nach oben abzweigt und das untere Zufuhrrohr (334) nach unten abzweigt, wobei das Luftzufuhrrohr (330) dazu ausgelegt ist, die Verbrennungsluft zur oberen Verbrennungskammer (310) und unteren Verbrennungskammer (210) zuzuführen;
ein Drehteil (410), das an die untere Verbrennungskammer (210) angeschlossen ist, wobei das Drehteil dazu ausgelegt ist, die Verbrennungsluft eine Zentrifugalkraft im Ansprechen auf die Drehung des Drehteils (410) aufrechterhalten zu lassen, wenn ein Zündprozess in der unteren Verbrennungskammer (210) vonstattengeht;
eine Brennstoffzufuhr (510), die an einem unteren Ende des Drehteils (410) vorgesehen ist, wobei die Brennstoffzufuhr (510) einen Festmengeneinspeiser (530) umfasst, der dazu ausgelegt ist, den zuzuführenden Brennstoff in einer festen Menge in die untere Verbrennungskammer (210) einzulassen; und
eine Aschenbehandlungskammer (420), die auf einer Seite des Drehteils (410) angeordnet ist,
wobei die Aschenbehandlungskammer (420) dazu ausgelegt ist, Asche, Schlacke und Flugasche einzufangen und zu behandeln, die durch die Verbrennung des Brennstoffs erzeugt wurden,
wobei die obere Verbrennungskammer (310) umfasst:
einen Außentank (318) der oberen Verbrennungskammer in zylindrische Form. Der in einer in der Richtung nach oben und unten geöffnet ist und einer Verbrennungsgasausleitplatte (314) aufweist, durch welche die Feuersäule ausgeleitet wird; wobei der Außentank (318) der oberen Verbrennungskammer derart an das obere Zufuhrrohr (332) angeschlossen ist, dass die Verbrennungsluft, die nach oben zugeführt wurde, strömen kann;
ein Umleitungsteil (350), das an einem oberen Ende des Außentanks (318) der oberen Verbrennungskammer angeordnet ist, wobei das Umleitungsteil (350) dazu ausgelegt ist, die Verbrennungsluft umzuleiten, damit sie nach unten strömt; und
einen Innentank (316) der oberen Verbrennungskammer, der in einem vorbestimmten Abstand von einem Innenumfang des Außentanks (318) der oberen Verbrennungskammer angeordnet ist, um eine obere Luftzufuhr zu bilden, wobei das obere Zufuhrrohr (332) auf eine kommunizierende Weise am Innentank (316) der oberen Verbrennungskammer befestigt ist,
wobei die untere Verbrennungskammer (210) an ein unteres Ende der oberen Verbrennungskammer angeschlossen ist und umfasst:
einen Außentank (218) der unteren Verbrennungskammer, wobei ein unteres Ende von diesem an das Drehteil (410) angeschlossen ist, wobei der Außentank (218) der unteren Verbrennungskammer an das untere Zufuhrrohr (334) angeschlossen und dazu ausgelegt ist, die diesem zugeführte Verbrennungsluft nach unten strömen zu lassen; und
einen Innentank (216) der unteren Verbrennungskammer, der im Inneren des Außentanks (218) der unteren Verbrennungskammer angeordnet ist, um eine untere Luftzufuhr zu bilden, wobei das untere Zufuhrrohr (334) auf eine kommunizierende Weise am Innentank (216) der unteren Verbrennungskammer befestigt ist.

2. Vorrichtung zur bereichsspezifischen zentrifugalen Verbrennung nach Anspruch 1, darüber hinaus eine Regelungsklappe (336) umfassend, die an einem Abzweigpunkt des Luftzufuhrrohrs (330) angeordnet ist, wobei die Regelungsklappe (336) dazu ausgelegt ist, eine Lufttemperatur und eine zugeführte Luftmenge zu regeln.

3. Vorrichtung zur bereichsspezifischen zentrifugalen Verbrennung nach Anspruch 1, wobei das Drehteil (410) umfasst:
ein Drehgehäuse (412), das an einen unteren Abschnitt der unteren Verbrennungskammer (210) angeschlossen ist, wobei das Drehgehäuse (412) mit Stützen (102) bestückt ist, die dazu ausgelegt sind, die Verbrennungsvorrichtung an einer Grundfläche zu festzusetzen;
einen Drehkörper (440), der in dem Drehgehäuse (412) angeordnet ist, wobei sich der Drehkörper (440) vor und zurück dreht, um eine Vorerwärmung der Verbrennungsluft zu ermöglichen, während er sich unter Aufrechterhaltung der Zentrifugalkraft nach unten bewegt; und
eine Aschenbehandlungskammer (420), die zwischen dem Drehgehäuse (412) und dem Drehkörper (440) angeordnet ist, wobei die Aschenbehandlungskammer dazu ausgelegt ist, die erzeugte Asche, Schlacke und Flugasche nach einer perfekten Verbrennung einzufangen.

4. Vorrichtung zur bereichsspezifischen zentrifugalen Verbrennung nach Anspruch 3, wobei der Drehkörper (440) umfasst:
eine Drehwelle (446), die derart an einen Antriebsmotor angeschlossen ist, dass die Drehwelle drehschlüssig mit dem Drehgehäuse verbunden ist, wodurch eine Drehkraft bereitgestellt wird;
eine Führungsschiene (444), die an die Drehwelle (446) angeschlossen ist, wobei die Führungsschiene (444) dazu ausgelegt ist, einen Drehbereich des Drehkörpers (440) zu führen;
einen Lagerkörper (442), der die Drehung der Drehwelle (446) und der Führungsschiene (444) unterstützt;
Zerkleinerungsklingen (470), die an einem unteren Abschnitt des Drehkörpers (440) angeordnet sind, wobei die Zerkleinerungsklingen (70) dazu ausgelegt sind, die erzeugte Asche, Schlacke und Flugasche nach Abschluss der Verbrennung zu zerkleinern; und
eine Öffnungs-/Schießtür (430), die dazu ausgelegt ist, die durch die Zerkleinerungsklingen (470) zerkleinerte Asche, Schlacke und Flugasche in die Aschenbehandlungskammer (420) einbringen zu lassen.

5. Vorrichtung zur bereichsspezifischen zentrifugalen Verbrennung nach Anspruch 4, wobei, wenn die Zerkleinerungsklingen (470) des Drehkörpers (440) dazu ausgelegt sind, sich vor und zurück zu drehen, derart, dass, wenn sich die Zerkleinerungsklingen (470) des Drehkörpers (40) vorwärts drehen, die Schlacke zerkleinert wird, der Brennstoff in einer Mitte der Verbrennungskammer gesammelt wird, und Rückstände kontinuierlich ausgeleitet werden, und wenn sich die Zerkleinerungsklingen (470) des Drehkörpers (440) rückwärts drehen, die Rückstände, die Asche und die Schlacke durch die Öffnungs-/Schießtür (430) kontinuierlich zur Aschenbehandlungskammer (420) ausgeleitet werden,
wobei die Vorrichtung zur bereichsspezifischen zentrifugalen Verbrennung darüber hinaus einen bidirektionalen Funktionsaustragskratzer (450) umfasst, der dazu ausgelegt ist, die Rückstände, die Asche und die Schlacke, die sich in der Aschenkammer (420) angesammelt haben, zu einem Aschenbehälter (106) auszuleiten.

6. Vorrichtung zur bereichsspezifischen zentrifugalen Verbrennung nach Anspruch 1, wobei die Brennstoffzufuhr (510) einen Brennstoffeintragskonus (512) umfasst, wobei ein oberer Abschnitt des Brennstoffeintragskonus (512) in einer Trichterform vorliegt, so dass sich eine feste Menge Brennstoff gleichmäßig in einer hemisphärischen Form verteilt.

## Revendications

1. Appareil de combustion centrifuge spécifique sectorielle utilisant un flux d'air de combustion, comprenant :
une chambre de combustion supérieure (310) via laquelle de l'air de combustion peut être fourni, et qui est configurée pour évacuer une colonne de feu produite par combustion moyennant l'air de combustion ;
une chambre de combustion inférieure (210) couplée à une partie inférieure de la chambre de combustion supérieure (310), la chambre de combustion inférieure (210) étant configurée de telle sorte que du combustible puisse être fourni via la chambre de combustion inférieure (310) de telle sorte que le combustible se mélange à l'air de combustion ;
une conduite d'alimentation en air (330) ayant une extrémité divisée en une conduite d'alimentation supérieure (332) et une conduite d'alimentation inférieure (334), la conduite d'alimentation supérieure (332) divergeant vers le haut et la conduite d'alimentation inférieure (334) divergeant vers le bas, la conduite d'alimentation en air (330) étant configurée pour fournir l'air de combustion à la chambre de combustion supérieure (310) et à la chambre de combustion inférieure (210) ;
une partie rotative (410) connectée à la chambre de combustion inférieure (210), sachant que la partie rotative est configurée pour permettre à l'air de combustion de maintenir une force centrifuge en réponse à la rotation de la partie rotative (410) lorsqu'une ignition a lieu dans la chambre de combustion inférieure (210) ;
une alimentation en combustible (510) prévue sur une extrémité inférieure de la partie rotative (410), l'alimentation en combustible (510) comprenant un alimentateur à quantité fixe (530) qui est configuré pour permettre au combustible d'être fourni dans une quantité fixe à la chambre de combustion inférieure (210) ; et
une chambre de traitement de cendre (420) disposée d'un côté de la partie rotative (410),
la chambre de traitement de cendre (420) étant configurée pour piéger et traiter de la cendre, de la scorie, et de la cendre entraînée par l'air produites par incinération du combustible,
sachant que la chambre de combustion supérieure (310) comprend :
un réservoir extérieur de chambre de combustion supérieure (318) de forme cylindrique ouvert dans la direction haut-bas, présentant un panneau d'évacuation de gaz de combustion (314) via lequel la colonne de feu est évacuée, sachant que le réservoir extérieur de chambre de combustion supérieure (318) est connecté à la conduite d'alimentation supérieure (332) de telle sorte que l'air de combustion qui a été fourni vers le haut puisse s'écouler ;
une partie de redirection (350) disposée sur une extrémité supérieure du réservoir extérieur de chambre de combustion supérieure (318), la partie de redirection (350) étant configurée pour rediriger l'air de combustion pour qu'il s'écoule vers le bas ; et
un réservoir intérieur de chambre de combustion supérieure (316) disposé à une distance prédéterminée d'une circonférence intérieure du réservoir extérieur de chambre de combustion supérieure (318) pour former une alimentation en air supérieure, la conduite d'alimentation supérieure (332) étant fixée au réservoir intérieur de chambre de combustion supérieure (316) d'une manière communicante,
sachant que la chambre de combustion inférieure (210) est connectée à une extrémité inférieure de la chambre de combustion supérieure (310), et comprend :
un réservoir extérieur de chambre de combustion inférieure (218), dont une extrémité inférieure est connectée à la partie rotative (410), sachant que le réservoir extérieur de chambre de combustion inférieure (218) est connecté à la conduite d'alimentation inférieure (334), et qui est configuré pour faire en sorte que l'air de combustion fourni à celle-ci s'écoule vers le bas ; et
un réservoir intérieur de chambre de combustion inférieure (216) disposé à l'intérieur du réservoir extérieur de chambre de combustion inférieure (218) pour former une alimentation en air inférieure, la conduite d'alimentation inférieure (334) étant fixée au réservoir intérieur de chambre de combustion inférieure (216) d'une manière communicante.

2. L'appareil de combustion centrifuge spécifique sectorielle selon la revendication 1, comprenant en outre un volet de régulation (336) disposé à un point divergeant de la conduite d'alimentation en air (330), le volet de régulation (336) étant configuré pour réguler une température d'air et une quantité d'air fournie.

3. L'appareil de combustion centrifuge spécifique sectorielle selon la revendication 1, sachant que la partie rotative (410) comprend :
un logement rotatif (412) connecté à une partie inférieure de la chambre de combustion inférieure (210), le logement rotatif (412) étant couplé à des béquilles (102) qui sont configurées pour fixer l'appareil de combustion à une surface de sol ;
un corps rotatif (440) disposé à l'intérieur du logement rotatif (412), sachant que le corps rotatif (440) tourne vers l'avant et vers l'arrière pour permettre à l'air de combustion préchauffé, tout en se déplaçant vers le bas, de maintenir une force centrifuge ; et
une chambre de traitement de cendre (420) disposée entre le logement rotatif (412) et le corps rotatif (440), sachant que la chambre de traitement de cendre est configurée pour piéger la cendre, la scorie, et la cendre entraînée par l'air produites après une combustion parfaite.

4. L'appareil de combustion centrifuge spécifique sectorielle selon la revendication 3, sachant que le corps rotatif (440) comprend :
un arbre rotatif (446) connecté à un moteur d'entraînement de telle sorte que l'arbre rotatif soit couplé en rotation au logement rotatif, fournissant ainsi une force de rotation ;
un rail de guidage (444) connecté à l'arbre rotatif (446), sachant que le rail de guidage (444) est configuré pour guider une plage de rotation du corps rotatif (440) ;
un corps de palier (442) supportant une rotation de l'arbre rotatif (446) et le rail de guidage (444) ;
des lames de concassage (470) disposées sur une partie inférieure du corps rotatif (440), sachant que les lames de concassage (470) sont configurées pour concasser la cendre, la scorie, et la cendre entraînée par l'air produites après achèvement de la combustion ; et
une porte d'ouverture/fermeture (430) configurée pour permettre à la cendre, la scorie, et la cendre entraînée par l'air concassées par les lames de concassage (470) d'être introduites dans la chambre de traitement de cendre (420).

5. L'appareil de combustion centrifuge spécifique sectorielle selon la revendication 4, sachant que, lorsque les lames de concassage (470) du corps rotatif (440) sont configurées pour tourner vers l'avant et vers l'arrière, de telle sorte que lorsque les lames de concassage (470) du corps rotatif (440) tournent vers l'avant, la scorie soit concassée, le combustible est collecté au centre de la chambre de combustion, et des déchets sont continuellement évacués, et lorsque les lames de concassage (470) du corps rotatif (440) tournent vers l'arrière, les déchets, la cendre, et la scorie sont continuellement évacués vers la chambre de traitement de cendre (420) via la porte d'ouverture/fermeture (430),
l'appareil de combustion centrifuge spécifique sectorielle comprenant en outre un racleur d'évacuation fonctionnel bidirectionnel (450) configuré pour évacuer les déchets, la cendre, et la scorie collectés dans la chambre de traitement de cendre (420) vers un conteneur de cendre (106).

6. L'appareil de combustion centrifuge spécifique sectorielle selon la revendication 1, sachant que l'alimentation en combustible (510) comprend un cône d'entrée de combustible (512), sachant qu'une partie supérieure du cône d'entrée de combustible (512) est en forme d'entonnoir de telle sorte qu'une quantité fixe de combustible se propage uniformément en forme hémisphérique.
